# EUROPÄISCHE PATENTSCHRIFT

(11) **EP 2 955 043 B1**
(45) Veröffentlichungstag und Bekanntmachung des Hinweises auf die Patenterteilung: **01.08.2018**
(21) Anmeldenummer: 15001614.5
(22) Anmeldetag: 29.05.2015
(51) Int. Cl.: B60J 7/16

(54) **FAHRZEUGLUKE**
VEHICLE HATCH
TRAPPE DE VÉHICULE

(30) Priorität: 10.06.2014 LU 92473
(43) Veröffentlichungstag der Anmeldung: 16.12.2015
(73) Patentinhaber: Krumm, Achim, 72348 Rosenfeld (DE)
(72) Erfinder: Krumm, Achim, 72348 Rosenfeld (DE)

(56) Entgegenhaltungen:
- DE-A1- 2 826 777
- DE-C1- 3 908 239
- FR-A- 1 390 862
- US-A- 4 104 825

## Beschreibung

Die vorliegende Erfindung bezieht sich im Allgemeinen auf Fahrzeugluken. Insbesondere bezieht sich die vorliegende Erfindung auf Fahrzeugluken mit einem torsionssteifen und thermisch isolierenden Rahmen.

Fahrzeugluken des Standes der Technik werden zumeist so konstruiert, dass sie einen Aufbau aus mehreren Baugruppen aufweisen. In das Fahrzeug wird für gewöhnlich ein Fahrzeugrahmen eingebaut, welcher einen beweglichen Rahmen trägt. Dieser bildet die bewegliche Komponente der Luke und dient zum Öffnen und Schließen, sowie zum Abschluss gegenüber dem Fahrzeuginneren bzw. dem Fahrzeugrahmen im geschlossenen Zustand der Fahrzeugluke. Der bewegliche Rahmen umfasst ein Deckelement, welches transparent oder auch undurchsichtig sein kann, bzw. kann die Fahrzeugluke als Fenster oder als undurchsichtige Luke ausgeführt sein.

Bekannte Fahrzeugluken weisen mehrere Nachteile auf. Ihre Rahmen sind nicht frei von Kältebrücken ausgeführt, was bei unterschiedlichen Temperaturen außerhalb und innerhalb des Fahrzeugs zu Kondensatbildung an den Kältebrücken bzw. Rahmen führen kann, z.B. DE 3908239 C1. Insbesondere bei einer höheren Temperatur im Fahrzeuginneren gegenüber der Außenseite ist die Kondensatbildung auf Grund von Kältebrücken am Rahmen nachteilig, da das Schwitzwasser zu Schäden im Fahrzeug führen kann und im Falle von Tropfenbildung an über Kopf angeordneten Luken unangenehm sein kann. Weiterhin sind die Rahmen von nicht verwindungssteif und/oder nicht leichtgewichtig, so dass sie zum Beispiel mit mehreren Aufstellern aufgehalten werden müssen, die gewöhnlich symmetrisch und/oder paarweise angeordnet sind. Ein Verwinden der Luke hat zumeist eine reduzierte Dichtfähigkeit derselben zur Folge, was ebenfalls stark nachteilig ist.

Das Dokument US 4104825 A offenbart eine klappbare Lüftungsluke, bei welcher die mit Außen- und Innenluft in Berührung kommenden Bauteile ebenfalls einwandig ausgeführt sind und es daher zu Kältebrücken kommt. Die Eckstöße der Rahmenseiten verlaufen in dieser Offenbarung im Radius.

Das Dokument DE 2826777 A1 offenbart eine Hubluke mit einem festem und einem beweglichen Rahmen, die beide Hohlkammern aufweisen. Die Die Eckstöße der Rahmenseiten sind in dieser Offenbarung als spitz zulaufend ein notwendiges Merkmal der Offenbarung. Die Rahmenprofile offenbaren das Bestehen von Kältebrücken.

Das Dokument FR 1390862 A offenbart eine klappbare Luke, bei welcher die mit Außen- und Innenluft in Berührung kommenden Bauteile ebenfalls einwandig ausgeführt sind und es daher zu Kältebrücken kommt. Die Eckstöße der Rahmenseiten verlaufen in dieser Offenbarung im Radius.

Um den voran genannten Nachteilen zu begegnen hat es die vorliegende Erfindung zur Aufgabe eine Fahrzeugluke vorzuschlagen, die thermisch isoliert, leichtgewichtig sowie verwindungssteif ist.

Die voran genannte Aufgabe wird durch eine Fahrzeugluke mit allen Merkmalen des beigefügten Anspruch 1 gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Der Begriff "Fahrzeugluken" im Umfang dieses Dokumentes bezieht sich auf jegliche Art von Fahrzeugen, wie Land-, Wasser- und Luftfahrzeuge. Weiterhin werden hiermit auch Seilbahnen und nicht selbst angetriebene Fahrzeuge wie Anhänger, Schleppkähne, Lastensegler o.ä. umfasst. Die Luken sind ebenso dazu vorgesehen in Baugruppen von Fahrzeugen eingebaut zu werden, die vom Trägerfahrzeug getrennt werden können, wie zum Beispiel Absetzkoffer. Wie hierin verwandt kann sich der Begriff "Rahmen" sowohl auf den Fahrzeug- als auch auf den beweglichen Rahmen beziehen, da diese was die Erfindung betrifft oftmals gleich zu behandeln sind. Wenn es auf spezielle Unterschiede ankommt, so werden die Rahmen ausdrücklich benannt.

Weiterhin kann der Begriff "Fahrzeugluken" im Umfang dieses Dokumentes Luken betreffen, die in einem Fahrzeug über Kopf verbaut werden wie dies bei zum Beispiel Dach- oder auch Decksluken der Fall ist.

Eine erfindungsgemäße Fahrzeugluke umfasst einen Fahrzeugrahmen, der in das Fahrzeug eingebaut wird, sowie einen beweglichen Rahmen, der mit dem Fahrzeugrahmen beweglich zum Öffnen und Schließen der Luke verbunden ist. Weiterhin umfasst zumindest einer der Rahmen von Fahrzeugrahmen und beweglichem Rahmen ein Hohlkammerprofil. Ein Deckelement ist mit dem beweglichen Rahmen verbunden. Ein Hohlkammerprofil ist für Vorteilhaft für die Erhöhung der thermischen Isolierfähigkeit, vermittels der eingeschlossenen Luft bzw. vermittels eines eingebrachten Gases beträchtlich und reduziert somit Kältebrücken, bei denen ein thermischer Übergang von Außen- und Innenseite der Luke direkt möglich ist und sich folglich auf einer Innenseite der Luke am Rahmen Schwitzwasser bilden kann.

Die Verwindungssteifigkeit der Luke, sowie voran genannt die thermische Isolierung kann erhöht werden, wenn zumindest einer der beiden Rahmen (Fahrzeugrahmen und/oder beweglicher Rahmen) mit Hohlkammern ausgeführt sind. Weiterhin wirkt sich eine Hohlkammer im beweglichen Rahmen durch deren stabilitätserhöhende Eigenschaften vorteilhaft auf einen gleichmäßig festen Sitz des beweglichen Rahmens auf dem Fahrzeugrahmen in geschlossenen Zustand der Luke aus. Dies kann insbesondere im Falle eines Einsatzes bei Wasserfahrzeugen vorteilhaft sein, da somit eine möglichst hohe Dichtfähigkeit der Luke gewährleistet wird.

Die Rahmen können aus Metall oder Kunststoff oder auch einem Materialmix davon hergestellt sein. Dies hat beispielsweise den Vorteil, dass je nach Einsatzzweck und Umgebung das passende Material ausgewählt werden kann.

Der Fahrzeugrahmen kann eine Aussparung aufweisen, so dass ein Kragen am Fahrzeugrahmen ausgeführt wird, mit dem selbiger in einen Ausschnitt in einer Fläche hineinsteht, an welche der Rahmen befestigt wird. Dies hat vorteilhafterweise die Verbesserung der Optik im Inneren zur Folge, da z.B. etwaige Schnittkanten verdeckt werden. Weiterhin können eventuelle Einbauten wie ein Sichtschutz an diesen Kragen befestigt werden. Weiterhin erhöht eine voranstehend beschriebene Aussparung und damit Einsenkung in die Einbaufläche die Stabilität des Fahrzeugrahmens. Die Aussparung kann wahlweise mit rahmenseitigen Geometrien wie angebauten Dichtlippen/Dichtzonen versehen sein, sodass eine zusätzliche Aufbringung von Dichtmasse vermieden wird. Weiterhin kann der Rahmen wahlweise mit Geometrien versehen sein, welche die Aufbringung von Dichtmaterial vereinfachen bzw. dieses in eine gewünschte Position leiten bzw. in dieser halten.

Die Hohlkammer kann durch ein geeignetes Fertigungsverfahren wie Strangpressen/Extrudieren oder auch Pultrusion (Strangziehen) erzeugt werden. Dies hat beispielsweise den Vorteil, dass die Rahmen kostengünstig hergestellt werden können.

Im Falle eines Laminierens des beweglichen Rahmens kann das Deckelement entweder einstückig mit dem Rahmen laminiert werde oder aber ein separates Deckelement kann in den beweglichen Rahmen einlaminiert werden.

Die Hohlkammer in den Rahmen können durch zwei Halbschalen gebildet werden. Diese Halbschalen können wiederum aus Metall und/oder Kunststoff gebildet werden. Somit kann vorteilhafter Weise hinsichtlich der aus Halbschalen gebildeten Hohlkammern für den Einsatzzeck jeweils vorteilhafte Materialpaarungen zum Einsatz kommen. Der Begriff "Halbschalen" wie hier verwendet ist weit zu verstehen und bedeutet nicht, dass die Halbschalen tatsächlich die Hälfte, oder annähernd die Hälfte des durch sie gebildeten Rahmens ausmachen. Eine der Halbschalen könnte zum Beispiel nur einem Deckel gleich eine Seite der andern Halbschale verschließen.

Die einzelnen Halbschalen können mit bekannten Verbindungsverfahren zu einem Rahmen mit Hohlkammer verbunden werden. Weiterhin kann hierbei zwischen die beiden Halbschalen, unabhängig von deren Materialpaarung, eine zusätzliche Isolierschicht eingebracht werden.

Die Halbschalen können in einer Form mit faserverstärktem Kunststoff laminiert und anschließend durch ein trocken oder nass in nass Klebeverfahren zu einem Rahmen verbunden werden. Dies hat beispielsweise den Vorteil, dass die Rahmen mit einer hohen Oberflächengüte kostengünstig hergestellt werden können.

In die aus Halbschalen gebildete Hohlkammer können vor dem Fügen der Halbschalen Einlegeteile wie Metallverstärkungen, Gewindeeinsätze, Stützschäume usw. eingebracht werden. Dies hat beispielsweise den Vorteil, dass die Einlegeteile nach dem Fügen der beiden Halbschalen nicht mehr sichtbar sind.

Die Fahrzeugluke kann so gefertigt werden, dass zumindest eine Dichtung zwischen die Rahmen eingebracht und mit einem der Rahmen verbunden wird. Dies erhöht vorteilhafterweise die Schutzwirkung des durch die Fahrzeugluke abgetrennten Innenraumes von außen.

Weiterhin können auch mehrere Dichtungen zwischen den Rahmen und/oder dem Deckelement vorgesehen werden.

Die Rahmen können so gefertigt werden, dass die Ecken, welche jeweils die Seiten des Rahmens verbinden, im Radius verlaufen. Somit kann eine Fügung auf Gehrung von einzelnen Rahmenbauteilen vermieden werden. Dies hat beispielsweise den Vorteil, dass im Rahmen verlaufende Dichtungen durchgängig "um die Kurve" verlegt werden können, ohne an der Gehrung gestoßen werden zu müssen. Dies erhöht vorteilhafter Weise die Dichteigenschaften der Fahrzeugluke. Weiterhin wird die Dichtfähigkeit einer aus zumindest einem Hohlkammerprofil dadurch erhöht, dass die Dichtung zwischen den Rahmen auf einer ununterbrochenen Fläche an beiden Rahmen aufliegt und nicht z.B. durch Stöße in den Rahmenteilen ungleichmäßig belastet wird. Zudem wird somit die Optik der Luke verbessert und im Falle von im Boden eingelassenen Luken, die in einem Bereich des Fahrzeugs befindlich sind, das begehbar ist, kann somit die Verletzungsgefahr an diesen Ecken vermindert werden. Zudem werden an den Gehrungsstößen mit der Zeit auftretende Lackschäden vermieden. Dies ist zum einen vorteilhaft für die Optik und zu anderen wird ein Eindringen von Wasser in den Rahmen durch die beschädigte Lackschicht verhindert. Die Lebensdauer einer so gebildeten Luke erhöht sich somit. Wahlweise können beide oder nur ein Rahmen die im Radius verlaufenen Übergänge bzw. Ecken aufweisen. So könnte z.B. nur der bewegliche Rahmen die im Radius verlaufenen Übergänge bzw. Ecken aufweisen und der Fahrzeugrahmen scharfe Ecken haben. Die Radien können entweder beim Laminieren der Profile erzeugt werden, oder durch Biegen eines z.B. strangepressten/extrudierten Profils mit Hohlkammer. Auch ist eine Kombination möglich, bei der z.B. stranggepresste oder stranggezogene gerade verlaufende Profile mit entsprechenden im Radius verlaufenden Eckteilen verbunden werden.

Jeweils eine der Halbschalen des beweglichen Rahmens und des Fahrzeugrahmens können miteinander über ein einstückig mit den beiden Halbschalen der Rahmen ausgeführtes Scharnier verbunden sein. Dies hat beispielsweise den Vorteil, dass keine zusätzlichen Bauteile als Scharnier(e) in den Rahmen eingebracht werden müssen und das die somit einstückig verbundenen Halbschalen der Rahmen wasserdicht und übergangslos verbunden werden können.

Weiterhin kann das Deckelement ein jegliches flächiges oder anderswie gestaltetes Element sein, welches den durch den beweglichen Rahmen eingefassten Raum abdeckt. Das Deckelement ist vorteilhafterweise in eine Aussparung des beweglichen Rahmens eingelegt, sodass es mit dem Rahmen eine im Wesentlichen ebene Fläche ohne Kanten bildet, sodass im Falle eines Verbaus in einem begehbaren Bereich vorteilhafterweise Kanten vermieden werden, die ein Stolpern provozieren bzw. im Falle eines Einsatzes auf einem Wasserfahrzeug sich zum Beispiel Leinen verfangen können. Ein weiterer Vorteil einer kantenlosen Anordnung des Deckelements im Rahmen ist, die Vermeidung von Stauwasser auf der Luke, was bei Verdunsten desselbigen zu Verkrustungen führen kann. Das Deckelement kann wunschweise auch aus einem Isolierglaselement gebildet sein, womit sich vorteilhafterweise eine Fahrzeugfensterluke bilden lässt, die im Wesentlichen schwitzwasserfrei ist.

Bei der Verbindung zwischen beweglichen Rahmen und Deckelement ist auf Dichtigkeit zu achten. Diese kann durch Verklebung und/oder bauliche Gestaltung von beweglichen Rahmen und/oder Deckelement herbeigeführt werden.

Alternativ kann für einen der Rahmen nur eine Halbschale gefertigt werden, die dann mit einer Vergussmasse ausgegossen wird. Hierfür kommen prinzipiell beide Halbschalen eines Rahmes in Betracht, jedoch wird man zweckmäßiger Weise den Rahmen so gestalten, dass die Halbschale und Vergussmasse so angeordnet werden, dass die Halbschale die Vergussmasse vor Witterungseinflüssen bzw. mechanischen Belastungen und generell Beschädigungen schützen kann. Dies bedeutet im Falle des beweglichen Rahmens, dass die Halbschale die Vergussmasse zur Außenseite hin abschirmt. Diese Variante hat beispielsweise den Vorteil, dass ein Rahmen schnell und kostengünstig hergestellt werden kann, wobei ebenfalls die Vorteile der erhöhten Isolationswirkung und hohen Verwindungssteifigkeit bei niedrigem Gewicht gegeben sind.

Unter der Vergussmasse können massive oder schaumige (mit Treibmittel) Vergussmassen oder eine Mischung bzw. Schichtung von beiden verstanden werden. Im Falle eines Schaumes als Vergussmasse kann vorteilhafter Weise eine Gewichtseinsparung erreicht werden.

Bevorzugt kann bei der Auswahl/Verarbeitung der Vergussmasse darauf geachtet werden, dass die entstehenden Flächen an der offenen Seite der Halbschale nicht mehr weiter bearbeitet werden müssen bzw. mit wenig Aufwand weiter bearbeitet werden können (Lackieren, etc.). Weiterhin kann vorteilhafterweise darauf geachtet werden, dass die entstehenden Flächen von einer entsprechenden Güte sind, dass sie im Zusammenspiel mit Dichtungen eine bestmögliche Dichtwirkung bereitstellen. Hierzu zählen auch Arbeitsschritte während/nach dem Verguss zur Erzeugung von Geometrien, die alleine oder in Kombination mit Dichtungen sich erhöhend auf die Dichtfähigkeit der Luke auswirken.

Ebenfalls ist es möglich die Vergussmasse zumindest im Bereich der Dichtflächen so zu wählen, dass die Vergussmasse selbst die Dichtungen ausbildet.

Die Dichtfähigkeit der Luke kann ebenso durch das Ausbilden von Geometrien zum Ableiten von Wasser in zumindest einen der Rahmen erhöht werden.

Die Fahrzeugluke kann als Klappluke ausgeführt sein, bei der ein Scharnier den beweglichen Rahmen am Fahrzeugrahmen anlenkt.

Die Fahrzeugluke kann zumindest eine Verriegelungseinrichtung umfassen, die den beweglichen Rahmen mit dem Fahrzeugrahmen verriegelt.

Die Fahrzeugluke kann zumindest eine Aufstell- bzw. Halteeinrichtung umfassen, welche den beweglichen Rahmen in einem geöffneten Zustand in zumindest einer Position hält. Die Halteeinrichtung kann weiterhin entweder stufenlos oder mehrere diskrete Positionen aufweisen.

Alle oben aufgeführten Merkmale können ebenso auf eine Luke angewendet werden, die zumindest einen Rahmen aufweist, die aus einer Halbschalen-Vergussmassen Kombination gebildet wird. Es ist weiterhin möglich eine Fahrzeugluke bereit zu stellen, bei der einer der Rahmen aus zwei Halbschalen und der andere aus einer Halbschalen-Vergussmassen Kombination gebildet wird, oder bei der nur ein Rahmen aus zwei Halbschalen bzw. einer Halbschalen-Vergussmassen Kombination gebildet wird und der andere Rahmen massiv ausgebildet ist.

Im Folgenden werden die beigefügten Figuren kurz beschrieben, die als nicht maßstabsgetreue Schemazeichnungen zu verstehen sind.
Figur 1 zeigt eine Querschnittsansicht einer erfindungsgemäßen Fahrzeugluke in eingebautem Zustand, bei der die beiden Rahmen aus je zwei Halbschalen gebildet sind.
Figur 2 zeigt eine Querschnittsansicht einer weiteren Ausführungsform einer erfindungsgemäßen Fahrzeugluke in eingebautem Zustand, bei der die beiden Rahmen aus je einer vergossenen Halbschale gebildet sind.
Figur 3 zeigt eine Draufsicht auf eine erfindungsgemäße Fahrzeugluke beider Ausführungsformen.

Im Folgenden werden zwei Ausführungsformen unter Bezugnahme auf die beigefügten Figuren beschrieben.

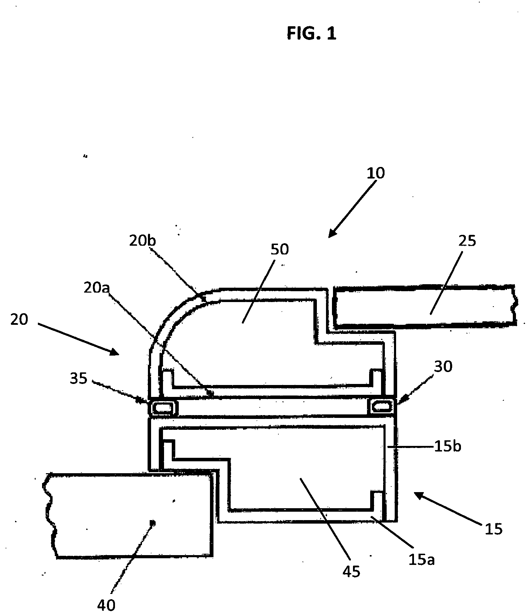

Unter anfänglicher Bezugnahme auf Figur 1 wird eine Fahrzeugluke 10 gemäß einer ersten Ausführungsform beschrieben, welche im Wesentlichen einen Fahrzeugrahmen 15, einen beweglichen Rahmen 20 und ein Deckelement 25 umfasst.

Der Fahrzeugrahmen 15 wird selbst aus zwei Halbschalen 15a und 15b gebildet, die miteinander verklebt sind. Wie in Fig. 1 zu sehen, ist die Halbschale 15a in die Halbschale 15b unter Zuhilfenahme von an der Halbschale 15a ausgebildeten Laschen eingeklebt. Weiterhin bildet die Halbschale 15a eine Aussparung aus, vermittels welcher der Fahrzeugrahmen 15 in einen Ausschnitt einer Fläche 40 eingesenkt werden kann. Die Halbschalen 15a und 15b bilden einen Hohlraum 45 der mit Gas/Luft gefüllt ist

Der bewegliche Rahmen 20 wird wiederum aus zwei Halbschalen 20a und 20b gebildet, die miteinander verklebt sind. Wie in Fig. 1 zu sehen, ist die Halbschale 20a ist in die Halbschale 20b ebenso unter Zuhilfenahme von an der Halbschale 20a ausgebildeten Laschen eingeklebt. In der dargestellten Ausführungsform weißt die Halbschale 20b des beweglichen Rahmens 20 eine Aussparung zur Aufnahme des Deckelements 25 auf. Die Halbschalen 20a und 20b bilden einen Hohlraum 50 der mit Gas/Luft gefüllt ist.

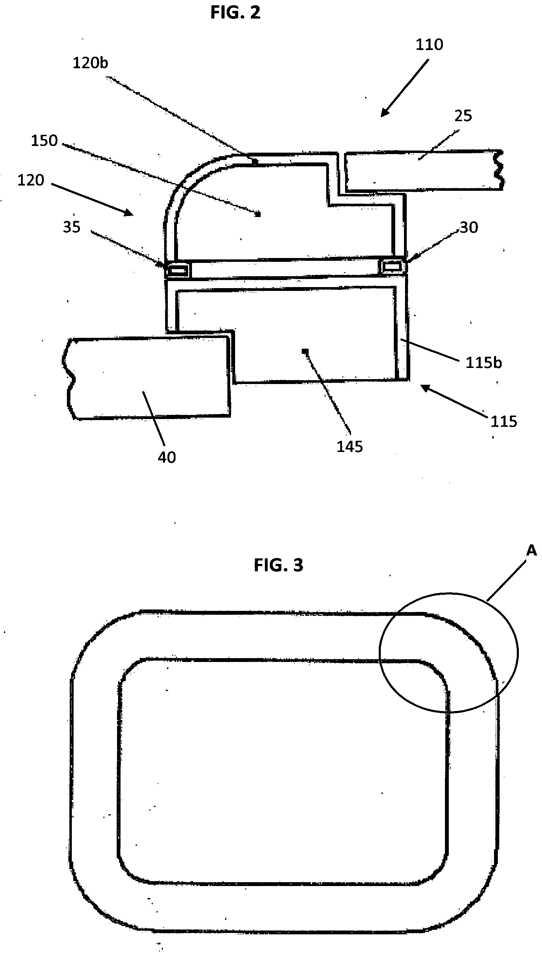

Der bewegliche Rahmen 20 dichtet vermittels zweier Dichtungen 30 und 35 gegenüber dem Fahrzeugrahmen 15 ab. Durch eine Gestaltung der beiden Rahmen mit im Radius verlaufenden Ecken, wie dies im Bereich A der Figur 3 zu sehen ist, können die Dichtungen 30 und 35 durchgängig verlaufen und müssen an den Ecken bzw. Übergängen der Rahmenseiten nicht gestoßen werden. Der bewegliche Rahmen 20 ist über nicht gezeigte Scharniere mit dem Fahrzeugrahmen 15 verbunden und verriegelt über nicht gezeigte Verriegelungen in der geschlossenen Position.

Unter Bezugnahme auf Figur 2 wird im Folgenden eine weitere Ausführungsform der Erfindung beschrieben. Eine Fahrzeugluke 110 umfasst im Wesentlichen einen beweglichen Rahmen 120, einen Fahrzeugrahmen 115 und ein Deckelement 25.

Der Fahrzeugrahmen 115 wird selbst aus einer Halbschale 115b gebildet, die mit einem Schaum 145 ausgeschäumt ist. Wie in Fig. 2 zu sehen, ist die Halbschale 115b nach unten hin offen, um das Einbringen des Schaumes zu ermöglichen und diesen gleichzeitig nach den Außenseiten hin zu schützen. Weiterhin bildet die Halbschale 115b eine Aussparung aus, vermittels welcher der Fahrzeugrahmen 115 in einen Ausschnitt einer Fläche 40 eingesenkt werden kann.

Der bewegliche Rahmen 120 wird wiederum aus einer Halbschale 120b gebildet, die mit einem Schaum 150 ausgeschäumt ist. Wie in Fig. 2 zu sehen, ist die Halbschale 120b nach unten hin offen, um das Einbringen des Schaumes zu ermöglichen und diesen gleichzeitig nach den Außenseiten hin zu schützen. In der dargestellten Ausführungsform weißt die Halbschale 120b des beweglichen Rahmens 120 eine Aussparung zur Aufnahme des Deckelements 25 auf.

Der bewegliche Rahmen 120 dichtet vermittels zweier Dichtungen 30 und 35 gegenüber dem Fahrzeugrahmen 115 ab. Durch eine Gestaltung der beiden Rahmen mit im Radius verlaufenden Ecken, wie dies im Bereich A der Figur 3 zu sehen ist, können die Dichtungen 30 und 35 durchgängig verlaufen und müssen an den Ecken bzw. Übergängen der Rahmenseiten nicht gestoßen werden. Der bewegliche Rahmen 120 ist über nicht gezeigte Scharniere mit dem Fahrzeugrahmen 115 verbunden und verriegelt über nicht gezeigte Verriegelungen in der geschlossenen Position.

Ein jeder der in der zweiten Ausführungsform beschriebenen Rahmen wird durch folgendes Herstellungsverfahren gebildet:
- Erzeugen der Halbschale 115b/120b bzw. deren Profil durch Laminieren oder Strangpressen / Extrudieren oder Strangziehen
- ggf. Verbinden von geraden Rahmenteilen mit Eckteilen, die im Radius verlaufen, um die Halbschale 115b/120b zu bilden oder Biegen von einem extrudierten Profil, um eine Halbschale zu formen
- Wahlweises Einlegen von Einlegeteilen
- Vergießen der Halbschale 115b/120b mit einer Vergussmasse, welche ein Treibmittel enthält
- ggf. Nacharbeiten der entstandenen Gussflächen an der offenen Seite der Halbschale 115b/120b

Anschließend werden die Rahmen unter Verwendung von ggf. eingegossenen Scharnieren, Verriegelungen und Aufstellern zusammengebaut. Weiterhin wird das Deckelement in den beweglichen Rahmen 120 eingebaut und die Dichtungen 30 und 35 angebracht.

## Patentansprüche

1. Fahrzeugluke (10) umfassend:
einen Fahrzeugrahmen (15);
einen beweglichen Rahmen (20); und
ein Deckelement (25);
wobei das Deckelement (25) mit dem beweglichen Rahmen (20) und weiterhin der bewegliche Rahmen (20) mit dem Fahrzeugrahmen (15) verbunden ist, wobei die Ecken, welche jeweils die Seiten zumindest eines der Rahmen verbinden, im Radius verlaufen und wobei beide Rahmen (15; 20) jeweils eine Hohlkammer (45; 50) umfassen, **dadurch gekennzeichnet, dass** die Hohlkammer (45; 50) ein Gas einschließt oder in die Hohlkammer (45; 50), welche zumindest eine Halbschale (15a; 15b; 20a; 20b; 120a; 120b) umfasst, ein Stützschaum (145; 150) eingebracht ist und wobei der Fahrzeugrahmen (15) zum Einbau in ein Fahrzeug vorgesehen ist.

2. Fahrzeugluke nach Anspruch 1, bei welcher die beiden Rahmen (15, 20) aus Kunststoff oder Metall oder einer Kombination von Kunststoff und Metall gebildet sind.

3. Fahrzeugluke nach Anspruch 2, bei welcher einer der zumindest eine Rahmen (15; 20) mit Hohlkammer (45; 50) aus Halbschalen (15a, 15b; 20a, 20b) gebildet wird.

4. Fahrzeugluke nach Anspruch 3, bei welcher jeweils beide Halbschalen (15a, 15b; 20a, 20b) eines Rahmens (15; 20) aus Metall gebildet und durch eine Isolierschicht verbunden sind.

5. Fahrzeugluke nach Anspruch 2, bei welcher zumindest einer der Rahmen aus Halbschalen (15a, 15b; 20a, 20b) geformt wird, gebildet aus einer Paarung von Metall und Kunststoff.

6. Fahrzeugluke nach Anspruch 3, bei welcher die Halbschalen (15a, 15b; 20a, 20b) aus faserverstärktem Kunststoff gebildet sind.

7. Fahrzeugluke nach Anspruch 3, bei welcher in der aus Halbschalen (15a, 15b; 20a, 20b) gebildeten Hohlkammer (45; 50) Einlegeteile eingebracht sind.

8. Fahrzeugluke nach einem der vorangegangenen Ansprüche, bei welchem den beiden Rahmen (15; 20) zumindest eine Dichtung (30; 35) zwischen geordnet ist.

9. Fahrzeugluke nach einem der vorangegangenen Ansprüchen, bei dem ein die beiden Rahmen (15; 20) verbindendes Scharnier einstückig mit den Rahmen ausgeführt ist.

10. Fahrzeugluke nach einem der vorangegangenen Ansprüchen, bei dem das Deckelement (25) eine Isolierglaseinheit umfasst.

11. Fahrzeugluke nach einem der vorangegangenen Ansprüchen, bei dem zumindest einer der Rahmen (15; 20) Geometrien zur Ableitung von Wasser aufweist.

## Claims

1. Vehicle hatch (10) comprising:
a vehicle frame (15);
a movable frame (20); and
a lid element (25);
wherein the lid element (25) is connected with the movable frame (20) and the movable frame (20) is further connected with the vehicle frame (15), wherein the corners connecting the sides of at least one frame are running in a radius and wherein both frames (15; 20) each comprise a cavity (45; 50) **characterized in that** the cavity (45; 50) encloses a gas or a support foam (145; 150) is embedded in the cavity, the cavity comprising at least a semi-shell (15a, 15b; 20a, 20b; 120a; 120b) and wherein the vehicle frame (15) is provided to be installed in a vehicle.

2. Vehicle hatch according to claim 1, wherein both frames (15, 20) are formed from plastic or metal or a combination of metal and plastic.

3. Vehicle hatch according to claim 2, wherein the at least one frame (15; 20) with cavity (45; 50) is formed from semi-shells (15a, 15b; 20a, 20b).

4. Vehicle hatch according to claim 3, wherein both semi-shells (15a, 15b; 20a, 20b) of a frame (15; 20) are formed from metal and are connected by an insulating layer.

5. Vehicle hatch according to claim 2, wherein at least one of the frames is formed from semi-shells (15a, 15b; 20a, 20b) being formed from a pairing of metal and plastic.

6. Vehicle hatch according to claim 3, wherein the semi-shells (15a, 15b; 20a, 20b) are formed from fiber reinforced plastic.

7. Vehicle hatch according to claim 3, wherein inlays are embedded in the cavity (45; 50) formed by the semi-shells (15a, 15b; 20a, 20b).

8. Vehicle hatch according to one of the preceding claims, wherein at least one sealing (30; 35) is provided between both frames (15; 20).

9. Vehicle hatch according to one of the preceding claims, wherein a hinge connecting both frames (15; 20) is unitary with the frames.

10. Vehicle hatch according to one of the preceding claims, wherein the lid element (25) comprises an insulation glass unit.

11. Vehicle hatch according to one of the preceding claims, wherein at least one of the frames (15; 20) Includes geometries to drain water.

## Revendications

1. Trappe de véhicule (10) comprenant :
un cadre de véhicule (15);
un cadre mobile (20); et
un élément de couverture (25);
dans lequel
l'élément de couverture (25) est connecté au cadre mobile (20) et le cadre mobile (20) est en outre connecté au cadre de véhicule (15), dans lequel les coins, qui connectent respectivement les côtés de au moins un cadre, passent dans un rayon, et dans lequel les deux cadres (15 ; 20) comprennent chacun une cavité (45; 50), **caractérisé en ce que** la cavité (45 ; 50) enferme un gaz ou une mousse de support (145 ; 150) est rapportée dans la cavité (45 ; 50), la cavité comprenant au moins une demi-coque (15a ; 15b ; 20a ; 20b ; 120a ; 120b), et dans laquelle le cadre de véhicule (15) est prévu pour être installé dans un véhicule.

2. Trappe de véhicule selon la revendication 1, dans laquelle les deux cadres (15, 20) sont formés en plastique ou métal ou une combinaison de plastique et métal.

3. Trappe de véhicule selon la revendication 2, dans laquelle un des au moins un cadre (15 ; 20) est formé avec une cavité (45 ; 50) à partir de demi-coques (15a ; 15b ; 20a ; 20b).

4. Trappe de véhicule selon la revendication 3, dans laquelle respectivement les deux demi-coques (15a ; 15b ; 20a ; 20b) d'un cadre (15 ; 20) sont formées en métal et sont connectées par une couche d'isolation.

5. Trappe de véhicule selon la revendication 2, dans laquelle au moins un des cadres (15 ; 20) est mise en forme à partir de demi-coques (15a ; 15b ; 20a ; 20b) qui sont formées en appareillant métal et plastique.

6. Trappe de véhicule selon la revendication 3, dans laquelle les demi-coques (15a ; 15b ; 20a ; 20b) sont formées de plastique renforcé avec des fibres.

7. Trappe de véhicule selon la revendication 3, dans laquelle des pièces d'insertion sont comprises/intégrées dans la cavité (45 ; 50) formée par les demi-coques (15a; 15b; 20a; 20b) .

8. Trappe de véhicule selon l'une des revendications précédentes, dans laquelle au moins un joint (30 ; 35) est agencé entre les deux cadres (15 ; 20).

9. Trappe de véhicule selon l'une des revendications précédentes, dans laquelle une charnière connectant les deux cadres (15 ; 20) est formée intégralement avec les cadres.

10. Trappe de véhicule selon l'une des revendications précédentes, dans laquelle l'élément de couverture (25) comprend une unité de verre isolant.

11. Trappe véhicule selon une des revendications précédentes, dans lequel au moins un des cadres (15 ; 20) comporte des géométries pour le drainage de l'eau.
